# EUROPÄISCHE PATENTSCHRIFT

(11) **EP 3 060 035 B1**
(45) Veröffentlichungstag und Bekanntmachung des Hinweises auf die Patenterteilung: **13.09.2017**
(21) Anmeldenummer: 13802224.9
(22) Anmeldetag: 21.10.2013
(51) Int. Cl.: A01C 7/10

(54) **VORRICHTUNG ZUM ERFASSEN VON MASSETEILCHEN**
DEVICE FOR DETECTING MASS PARTICLES
DISPOSITIF DE DÉTECTION DE CORPUSCULES

(43) Veröffentlichungstag der Anmeldung: 31.08.2016
(60) Teilanmeldung: 16193183.7
(73) Patentinhaber: Müller-Elektronik GmbH & Co. KG, 33154 Salzkotten (DE)
(72) Erfinder: HILLERINGMANN, Ulrich, 33181 Bad Wünnenberg (DE); MEYER ZU HOBERGE, Sebastian, 33106 Paderborn (DE); LIEBICH, Martin, 36287 Breitenbach (DE)
(74) Vertreter: Ostermann, Thomas
(86) Internationale Anmeldenummer: PCT/DE2013/000619
(87) Internationale Veröffentlichungsnummer: WO 2015/058735

(56) Entgegenhaltungen:
- EP-A1- 1 341 122
- EP-A2- 0 158 985
- DE-A1- 10 011 581
- DE-A1- 10 036 304
- DE-A1-102009 051 942
- US-A- 3 527 928
- US-A- 3 989 311
- US-A1- 2012 227 647

## Beschreibung

Die Erfindung betrifft eine Vorrichtung zum Erfassen von Masseteilchen nach dem Oberbegriff des Patentanspruchs 1.

Ferner betrifft die Erfindung eine Sämaschine gemäß dem Oberbegriff des Patentanspruchs 7.

Aus der DE 10 2009 051 942 A1 ist eine Vorrichtung zum Erfassen von Masseteilchen in leitungsgeführten Luftströmen bekannt, bei der ein Sensorelement in einer Leitung integriert ist, wobei durch die Leitung ein die Masseteilchen enthaltener Luftstrom geführt wird. Zum Zählen der Masseteilchen weist das Sensorelement ein Piezoelement auf, das sich auf einer dem Inneren der Leitung abgewandten Seite einer Prallfläche anschließt. Die Prallfläche des Sensorelementes bildet somit eine Innenwandung der Leitung. An das Piezoelement schließen sich auf einer dem Inneren der Leitung abgewandten Seite ein Dämpfungskörper sowie ein starrer Basiskörper an. Es ist wünschenswert, dass das Sensorelement in der Leitung so positioniert ist, dass möglichst alle Masseteilchen einmalig auf die Prallfläche auftreffen und damit gezählt werden können. Ferner ist es wünschenswert, dass das Sensorelement schwingungsentkoppelt, staub- bzw. wasserdicht und verschmutzungsunanfällig in der Leitung gelagert ist.

Aufgabe der vorliegenden Erfindung ist es daher, eine Vorrichtung zum Erfassen von Masseteilchen in leitungsgeführten Luftströmen sowie eine Sämaschine derart weiterzubilden, dass auf einfache Weise ein verbessertes Messergebnis erzielt wird, wobei insbesondere unterschiedlich ausgebildete Masseteilchen genau gezählt werden können, und dass ein Sensorelement montagefreundlich an der Leitung fixiert werden kann.

Zur Lösung dieser Aufgabe weist die Erfindung die Merkmale des Patentanspruchs 1 auf.

Vorteilhaft können Bauteile des Sensorelementes zusammengesteckt werden, wobei benachbarte Bauelemente des Sensorelementes jeweils flächig und/oder eben aneinanderliegen. Eine lötende Anbindung von Anschlussleitungen an das Piezoelement kann entfallen, da sich an das Piezoelement eine Dämpfungsscheibe mit elektrischen Verbindungselementen und eine Kontaktierungsscheibe mit entsprechenden Anschlussflächen anschließen, wobei die Kontaktierungsscheibe mit einer Anschlussleitung verbunden ist, die über einen Durchbruch des starren Basiskörpers nach außen geführt werden. Die Dämpfungsscheibe hat eine Doppelfunktion. Sie dient zum einen der Schlagbeanspruchung des Piezoelementes beim Auftreffen der Masseteilchen auf die Prallfläche. Zum anderen bewirken die elektrisch leitend ausgebildeten Verbindungselemente der Dämpfungsscheibe, dass eine elektrische Verbindung zum einen einer ersten Anschlussfläche des Piezoelementes an eine erste Anschlussfläche der Kontaktierungsscheibe und zum anderen einer zweiten Anschlussfläche des Piezoelementes an eine zweite Anschlussfläche der Kontaktierungsscheibe gewährleistet ist.

Nach einer bevorzugten Ausführungsform der Erfindung verlaufen das erste Anschlusselement der Kontaktierungsscheibe und das erste Verbindungselement der Dämpfungsscheibe kreisförmig. Das zweite Anschlusselement der Kontaktierungsscheibe und das zweite Verbindungselement der Dämpfungsscheibe verlaufen vorzugsweise kreisringförmig. Die Anschlusselemente und die Verschlusselemente der Kontaktierungsscheibe bzw. der Dämpfungsscheibe verlaufen jeweils vorzugsweise in einer gemeinsamen Ebene, so dass das Sensorelement einen kompakten Aufbau aufweist.

Vorzugsweise ist ein radialer Zwischenraum zwischen dem ersten Verbindungselement und dem zweiten Verbindungselement der Dämpfungsscheibe einerseits und dem ersten Anschlusselement und dem zweiten Anschlusselement der Kontaktierungsscheibe andererseits so groß gewählt, dass kein Kurzschluss entstehen kann. Vorzugsweise überdeckt das erste Verschlusselement das erste Anschlusselement der Kontaktierungsscheibe, wobei gleichzeitig ein ausreichend großer radialer Abstand zu dem zweiten Verbindungselement gewährleistet ist. Hierdurch ist eine sichere Kontaktierung zwischen der Kontaktierungsscheibe und der Dämpfscheibe gewährleistet.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: einen vergrößerten Querschnitt eines winkelförmigen Leitungsabschnittes, in dem zur vereinfachten Darstellung Bauelemente eines im Eckbereich angeordneten Sensorelementes explosionsartig nebeneinander dargestellt sind und
- Figur 2: eine schematische Vorderansicht der Bauelementen des Sensorelementes.

Eine Vorrichtung zum Erfassen von Masseteilchen in leitungsgeführten Luftströmen kann vorzugsweise in Sämaschinen oder Drillmaschinen integriert angeordnet sein. Darüber hinaus kann die erfindungsgemäße Vorrichtung auch in anderen Maschinen oder Einrichtungen integriert sein, in denen Masseteilchen durch Leitungen geführt werden und die Notwendigkeit besteht, die Masseteilchen zu zählen.

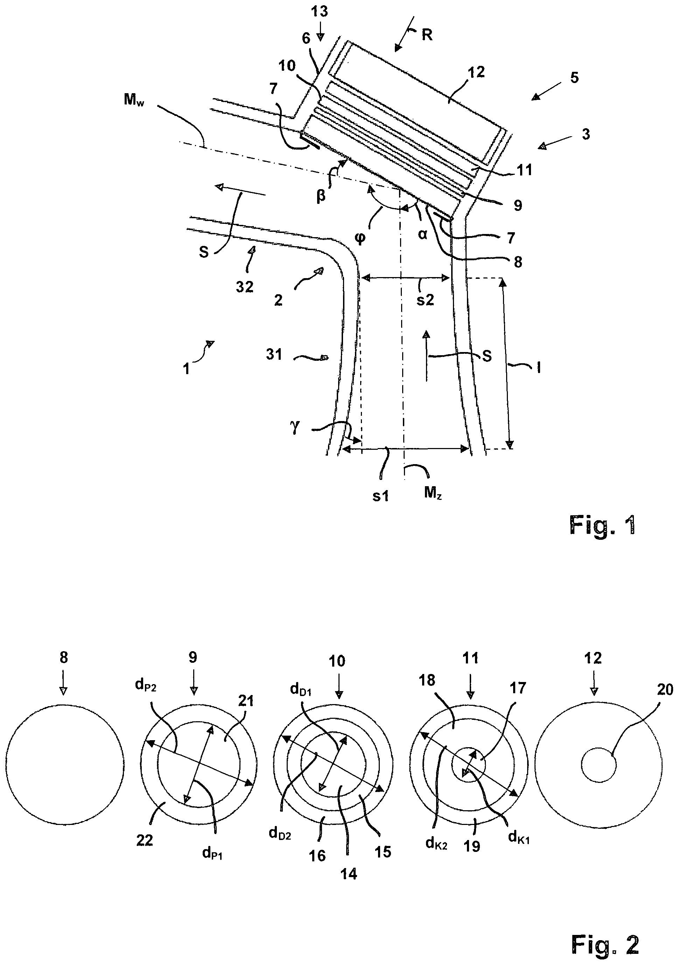

Eine nicht dargestellte Sämaschine weist einen Saatgutspeicher, eine Ausbringungseinrichtung zum Ausbringen von Saatgut aus dem Saatgutspeicher sowie ein Saatgutleitungssystem mit einem Hauptstromverteiler und mehreren einzelnen Leitungen auf. Die Leitung kann beispielsweise einen umlenkenden 1 Leitungsabschnitt aufweisen, der in Figur 1 näher dargestellt ist. Die Leitung bzw. der Leitungsabschnitt 1 kann als ein Rohr ausgebildet sein, in dem ein zu zählende Masseteilchen (Saatgutkörner) enthaltener Luftstrom in Strömungsrichtung S geführt transportiert wird. Das Rohr kann starr oder als ein flexibler Schlauch ausgebildet sein.

Der Leitungsabschnitt 1 weist einen Zuführungsabschnitt 31, einen Umlenkungsabschnitt 2 und einen Weiterleitungsabschnitt 32 auf. In dem Umlenkungsabschnitt 2 ist ein Sensorelement 3 zum Zählen der durch den Leitungsabschnitt 1 geleiteten Masseteilchen angeordnet ist.

Der Zuführungsabschnitt 31 und/oder der Weiterleitungsabschnitt 32 ist auf einer dem Umlenkungsabschnitt 2 abgewandten Seite mit einem nicht dargestellten geraden Leitungsabschnitt konstanten Durchmessers verbunden.

Der Leitungsabschnitt 1 ist winkelförmig angeordnet, wobei der Luftstrom im Umlenkungsabschnitt 2 von dem Zuführungsabschnitt 31 in Richtung des Weiterleitungsabschnittes 32 um einen stumpfen Winkel ϕ umgelenkt werden. An einem Außenbereich 5 des Umlenkungsabschnittes 2 ist das Sensorelement 3 angeordnet. Bauelemente des Sensorelementes 3 sind in einem Bohrungshals 6 des Umlenkungsabschnittes 2 angeordnet, wobei der Bohrungshals 6 in einem äußeren Eckbereich des Leitungsabschnittes 1 quer zu demselben abragt.

Das Sensorelement 3 ist vorzugsweise mittels eines Schraubverschlusses an dem Leitungsabschnitt 1 der Leitung 1 gelagert. Der Bohrungshals 6 weist in einem Fußbereich einen Anschlag 7 auf, an dem eine vorzugsweise scheibenförmige Prallfläche 8 des Sensorelementes 3 zur Anlage kommt. Die Prallfläche 8 bildet in der Montagelage eine Innenwandung des Leitungsabschnitts 1. Benachbart zu der Prallfläche 8 ist ein scheibenförmiges Piezoelement 9 angeordnet, an das sich ein scheibenförmiger Dämmkörper 10 und eine Kontaktierungsscheibe 11 anschließen. Die Prallfläche 8, das Piezoelement 9, der Dämpfungskörper 10 und die Kontaktierungsscheibe 11 sind in dem Bohrungshals 6 angeordnet. Als Abschluss kann außenseitig ein mit einem Innengewinde versehenes Festlegelement 12 auf den Bohrungshals 6 aufgesetzt angeordnet sein, wobei es mit einem Außengewinde 13 des Bohrungshalses 6 in Gewindeeingriff steht.

Als Abschluss des Sensorelementes 3 ist außenseitig, d. h. auf einer der Leitung 1 abgewandten Seite, vorzugsweise ein in Gewindeeingriff mit dem Bohrungshals 6 stehendes Festlegelement 12 vorgesehen. Das Festlegelement 12 ist bolzenförmig ausgebildet und kann ein Außengewinde aufweisen, das mit einem Innengewinde des Bohrungshalses 6 in Gewindeeingriff steht. Durch Eindrehen des Festlegelementes 12 in den Bohrungshals 6 werden die zwischen dem Festlegelement 12 und der Prallfläche 8 angeordneten Bauelemente 9, 10, 11 des Sensorelementes 3 verspannt bzw. in Axialrichtung zusammengedrückt, so dass sie in der Montagelage mechanisch und/oder elektrisch miteinander verbunden sind. Das Festlegelement 12 befindet sich in der Montagelage des Sensorelementes vorzugsweise in einer Arretierposition.

Das Festlegelement 12 dient als starrer Basiskörper, der in Montagerichtung R auf die sich anschließenden Bauelemente 8, 9, 10, 11 des Sensorelementes 3 drückt. Das Festlegelement 12 kann beispielsweise als ein Gewindebolzen, wie in Figur 1 dargestellt, oder als eine Überwurfmutter/-kappe ausgebildet sein.

Der Bohrungshals 6 weist über seine gesamte Länge einen konstanten Durchmesser auf, so dass die zu verpressenden Bauelemente des Sensorelementes 3, nämlich die Prallfläche 8, das Piezoelement 9, der Dämpfungskörper 10 und die Kontaktierungsscheibe 11 mit einer Passung eingesetzt werden können, so dass benachbarte Bauelemente des Sensorelementes 3 in der Montagelage flächig aneinanderliegen. Die einzuspannenden Bauelemente des Sensorelementes 3 weisen jeweils einen gleichen Außendurchmesser auf, so dass sie mit einer Passung in den Bohrungshals 6 einsetzbar sind. Der Bohrungshals 6 weist deswegen einen Innendurchmesser auf, der etwas größer ist als ein Außendurchmesser der einzuspannenden Bauelemente 8, 9, 10, 11 des Sensorelementes 3.

Zur Bereitstellung eines elektrischen Anschlusses für das Piezoelement 9, ohne dass das Messergebnis beeinträchtigt wird, besteht der Dämpfungskörper 10 vorzugsweise aus einem nachgiebigen bzw. flexiblen bzw. gummiartigen Material. Lediglich die leitfähigen Partikel in diesem Material sind nicht flexibel, sondern starr ausgebildet. Der Dämpfungskörper 10 ist scheibenförmig ausgebildet und weist ein zentrales erstes Verbindungselement 14 auf, das aus einem elektrischen leitenden Material besteht und kreisförmig ausgebildet ist. In radialer Richtung nach außen schließt sich an den ersten Verbindungselement 14 ein kreisringförmiges Gummielement 15 an, das gegenüber der Prallfläche 8 bzw. dem Piezoelement 9 dämpfend wirkt. Zugleich bildet das Gummielement 15 eine elektrische Isolierung zwischen dem ersten Verbindungselement 14 und einem sich in radialer Richtung nach außen anschließenden vorzugsweise kreisringförmigen zweiten Verbindungselement 16 des Dämpfungskörpers 10, das aus einem elektrisch leitenden Material besteht. Die Elemente 14, 15, 16 erstrecken sich im Wesentlichen als eine gemeinsame elastische Platte, die eine dämpfende Wirkung auf das Piezoelement ausüben.

Die Kontaktierungsscheibe 11 weist im zentralen Bereich ein kreisförmiges erstes Anschlusselement 17 auf, das aus einem elektrisch leitenden Material besteht. In radialer Richtung nach außen schließt sich ein kreisringförmiges Isolierelement 18 an, das vorzugsweise starr, aber auch nachgiebig ausgebildet sein kann. In radialer Richtung schließt sich an das Isolierelement 18 nach außen ein zweites Anschlusselement 19 an, das kreisringförmig und elektrisch leitend ausgebildet ist. Auf einer dem Inneren des Leitungsabschnitts 1 abgewandten Seite sind das erste Anschlusselement 17 und das zweite Anschlusselement 19 der Kontaktscheibe 11 mit nicht dargestellten elektrischen Zuführleitungen verbunden, die über einen Durchbruch 20 des Festlegelementes 12 nach außen geführt sind. Der Durchbruch 20 kann ein Innengewinde aufweisen, so dass die elektrische Zuführleitung an dem Festlegelement 12 verschraubt werden kann. Die Anschlussleitungen können mit einer nicht dargestellten Signalverarbeitungseinrichtung verbunden sein, so dass die Impulssignale des Piezoelementes 9 zur Zählung der auf die Prallfläche 8 auftreffenden Masseteilchen berechnet werden können. Bezüglich des Aufbaus der Signalverarbeitungseinrichtung wird auf die DE 10 2009 051 942 A1 verwiesen, deren Offenbarung Bestandteil dieser Anmeldung sein soll.

Das erste Verbindungselement 14 des Dämpfungskörpers 10 weist vorzugsweise einen größeren Durchmesser d_{D1} auf als ein Durchmesser d_{K1} des ersten Anschlusselementes 17 der Kontaktierungsscheibe 11. Das erste Verbindungselement 14 überdeckt somit in der Montagelage das erste Anschlusselement 17 und ermöglicht eine sichere Kontaktierung. Zur Kurzschlussvermeidung ist der Durchmesser d_{K1} des ersten Anschlusselementes 17 kleiner als ein Innendurchmesser des Verbindungselementes 16 des Dämpfungskörpers 10. Ein Innendurchmesser des zweiten Anschlusselements (9 der Kontaktierungsscheibe 11 ist größer als ein Durchmesser d_{D1}) des ersten Verbindungselements 14 des Dämpfungskörpers 10 ausgebildet, so dass kein Kurzschluss entstehen kann. Ein Durchmesser d_{D1} des ersten Verbindungselements 14 des Dämpfungskörpers 10 ist kleiner als ein Innendurchmesser des zweiten Anschlusselementes 22 des Piezoelementes 9.

Die Prallfläche 8, das Piezoelement 9, der Dämpfungskörper 10 und die Kontaktierungsscheibe 11 bilden jeweils Einlegeteile, die in den Bohrungshals 6 eingesetzt und in der Montagelage verpresst angeordnet sind. Der Außendurchmesser aller Einlegeteile, in der Figur 2 mit d_{P2} (Piezoelement 9), d_{D2} (Dämpfungsplatte) und d_{K2} (Kontaktierungsscheibe 11) bezeichnet, ist an den Innendurchmesser des Bohrungshalses 6 angepasst. Die Einlegeteile 8, 9, 10, 11 können ohne Verkanten und quasi ohne Passung montagefreundlich eingelegt werden.

Im vorliegenden Ausführungsbeispiel ist ein Außendurchmesser d_{K2} des zweiten Anschlusselementes 19 gleich einem Außendurchmesser d_{D2} des zweiten Verbindungselementes 16. Ferner ist der Innendurchmesser d_{K2} des zweiten Anschlusselementes 19 gleich zu einem Innendurchmesser d_{D2} des zweiten Verbindungselementes 16. Das zweite Verbindungselement 16 und das zweite Anschlusselement 19 weisen somit die gleiche radiale Erstreckung auf. Dadurch, dass die Bauelemente des Sensorelementes 3, nämlich das Piezoelement 9, der Dämpfungskörper 10 und die Kontaktierungsscheibe 11 koaxial zueinander angeordnet sind, überdecken sich das zweite Verbindungselement 16 und das zweite Anschlusselement 19 der Kontaktierungsscheibe 11.

Das Piezoelement 9 weist auf einer dem Inneren des Leitungsabschnitts 1 abgewandten Seite ein vorzugsweise kreisförmiges erstes Anschlusselement 21 mit einem Durchmesser d_{P1} und ein sich in radialer Richtung anschließendes zweites Anschlusselement 22 mit einem Durchmesser d_{P2} auf, das kreisringförmig ausgestaltet ist. Die beiden Anschlusselemente 21, 22 sind selbstverständlich an ihrer Grenzfläche durch einen nicht dargestellten Isolierungsring voneinander elektrisch isoliert angeordnet. Das zweite Anschlusselement 22 liegt in der Montagelage elektrisch leitend an dem zweiten Verbindungselement 16 der Dämpfungsscheibe 10 an.

Der Durchmesser d_{D1} des Verbindungselementes 14 und der Durchmesser d_{K1} der Kontaktierungsscheibe 11 sind jeweils kleiner als der Durchmesser d_{P1} des ersten Anschlusselementes 21 des Piezoelementes 9.

Das Gummielement 15 bildet einen solchen radialen Zwischenraum zwischen dem ersten Verbindungselement 14 und dem zweiten Verbindungselement 16, so dass das erste Verbindungselement 14 nicht in Kontakt mit dem zweiten Anschlusselement 22 des Piezoelementes 9 kommen kann. Bspw. können entgegen der Montagerichtung R die inneren Kontaktierungsflächen bzw. Anschlussflächen der Einlegeteile 9, 10, 11 schichtweise reduziert ausgebildet sein. Es wird eine sichere Isolierung bei möglichst geringem Kontaktwiderstand geschaffen. Durch flächige Anlage der Anschlusselemente 17, 19, 21, 22 bzw. Verbindungselemente 14, 16 des Piezoelementes 9, des Dämpfungsträgers 10 und der Kontaktierungsscheibe 11 wird eine montagefreundliche und betriebssichere elektrische Anschlussführung des Piezoelementes 9 nach außen geschaffen.

Wie besonders gut aus Figur 1 ersichtlich ist, besteht der Leitungsabschnitt 1 aus dem Zuführungsabschnitt 31, dem stromabwärts gelegenen Weiterleitungsabschnitt 32 und dem zwischen denselben angeordneten Umlenkungsabschnitt 2. In einem Außenbereich 5 des winkelförmigen Umlenkungsabschnittes 2 ist der Bohrungshals 6 angeordnet. Der Zuführungsabschnitt 31 verjüngt sich in Strömungsrichtung S. Vorzugsweise ist der Zuführungsabschnitt 31 konusförmig unter Verringerung seines Querschnitts in Strömungsrichtung S ausgebildet. Wandungen des Zuführungsabschnitts 31 sind so geformt, dass die im Luftstrom geführten Masseteilchen bzw. Saatkörner unter einer im Vergleich zum geraden Leitungsabschnitt 1 erhöhten Geschwindigkeit auf die Prallfläche 8 treffen. Die Prallfläche 8 ist vorzugsweise eben ausgebildet. Eine Mittelachse M_{Z} des Zuführungsabschnitts 31 schließt einen spitzen Winkel α mit der Prallfläche 8 ein. Eine Mittelachse M_{W} des Weiterleitungsabschnitts 32 schließt einen spitzen Winkel β mit der Prallfläche 8 ein. Der Weiterleitungsabschnitt 32 weist in Strömungsrichtung S einen konstanten Durchmesser oder vorzugsweise einen sich in Strömungsrichtung S vergrößernden Durchmesser auf, so dass Druckverluste minimiert werden können.

Durch die verjüngende Ausbildung des Zuführungsabschnitts 31 wird eine gezielte Strömungsführung der Masseteilchen in Richtung der Prallplatte 8 bewirkt, so dass alle Masseteilchen nur ein einziges Mal mittels des Sensorelementes 3 detektiert werden. Die verjüngende Anordnung des Zuführungsabschnitts 31 bewirkt insbesondere, dass die Masseteilchen nur in einem bestimmten Winkelbereich um den Winkel α herum auf die Prallfläche 8 auftreffen und dann nur in einem bestimmten Winkelbereich um den Austrittswinkel β herum in Richtung des Weiterleitungsabschnitts 32 umgelenkt werden. Eine gezielte Umlenkung des die Masseteilchen enthaltenen Luftstroms mit einem Eintrittswinkelbereich und einem Austrittswinkelbereich bewirkt eine definierte Detektion der Masseteilchen, ohne dass sich Masseteilchen mit dem Luftstrom an der Prallfläche 8 vorbeibewegen.

Nach einer nicht dargestellten alternativen Ausführungsform der Erfindung kann der Umlenkwinkel ϕ zwischen dem Zuführungsabschnitt 31 und dem Weiterleitungsabschnitt 32 auch ein rechter Winkel oder ein spitzer Winkel sein.

Der Zuführungsabschnitt 31 verjüngt sich in Strömungsrichtung S über eine axiale Länge I, die in einem Bereich zwischen 3cm und 6cm liegen kann, von einem Innendurchmesser s1 gleich 30mm auf einen Innendurchmesser s2 von 20mm. Ein Verjüngungswinkel γ beträgt somit bei einer Länge I von 3cm etwa 9°. Vorzugsweise ist der Zuführungsabschnitt 31 so verjüngend ausgebildet, dass der Verjüngungswinkel γ in einem Bereich zwischen 4° und 10° liegt.

Vorzugsweise besteht der Bohrungshals 6 aus einem nachgiebigen Material. Auch der weitere Bestandteil des Leitungsabschnittes 1 einschließlich des Zuführungsabschnittes 31, des Weiterleitungsabschnittes 32 und des Umlenkungsabschnittes 32 besteht aus einem nachgiebigen Kunststoffmaterial. Vorteilhaft wird hierdurch verhindert, dass s:ich Körperschallschwingungen von einem stromaufwärts angeordneten Hauptstromverteiler in Richtung des Piezoelementes 9 ausbreiten können. Es findet hierdurch quasi eine Schwingungsentkopplung des Piezoelementes 9 bzw. der Prallplatte 8 zu dem Leitungsabschnitt 1 statt.

## Patentansprüche

1. Vorrichtung zum Erfassen von Masseteilchen in leitungsgeführten Luftströmen, insbesondere von auszubringendem Saatgut in Sämaschinen, mit einer Leitung (1), durch die der die Masseteilchen enthaltene Luftstrom geführt wird, mit einem an der Leitung (1) angeordneten Sensorelement (3), wobei das Sensorelement (3) ein
- Piezoelement (9), auf einer dem Inneren der Leitung (1) zugewandten Seite des Piezoelementes (9) angeordnete Prallfläche (8),
- einen auf einer dem Inneren der Leitung abgewandten Seite des Piezoelementes (9) angeordneten Dämpfungskörper (10) sowie
- einen auf einer dem Inneren der Leitung abgewandten Seite des Piezoelementes (9) angeordneten starren Basiskörper (12) aufweist, **dadurch gekennzeichnet,**
- **dass** zwischen dem Dämpfungskörper (10) und dem starren Basiskörper (12) eine Kontaktierungsscheibe (11) mit einem ersten Anschlusselement (17) und mit einem in einem radialen Abstand zu demselben angeordneten zweiten Anschlusselement (19) angeordnet ist,
- **dass** der Dämpfungskörper (10) als eine Dämpfungsscheibe ausgebildet ist, die in radialer Richtung voneinander beabstandete elektrische Verbindungselemente (14, 16) aufweist, wobei ein erstes Verbindungselement (14) ausschließlich das erste Anschlusselement (17) der Kontaktierungsscheibe (11) mit einem ersten Anschlusselement (21) des Piezoelementes (9) einerseits und ein zweites Verbindungselement (16) der Dämpfungsscheibe ausschließlich das zweite Anschlusselement (19) der Kontaktierungsscheibe (11) mit dem zweiten Anschlusselement (22) des Piezoelementes (9) anderseits elektrisch verbindet.

2. Vorrichtung nach Anspruch 1, **dadurch gekennzeichnet, dass** das erste Anschlusselement (17, 21) der Kontaktierungsscheibe (11) bzw. des Piezoelementes (9) und das erste Verbindungselement (14) der Dämpfungsscheibe (10) kreisförmig einerseits und dass das zweite Anschlusselement (19, 22) der Kontaktierungsscheibe (11) bzw. des Piezoelementes (9) und das zweite Verbindungselement (16) der Dämpfungsscheibe (10) kreisringförmig andererseits ausgebildet sind.

3. Vorrichtung nach Anspruch 1 oder 2, **dadurch gekennzeichnet, dass** ein Durchmesser (d_{K1}) des ersten Anschlusselementes (17) kleiner als ein Innendurchmesser des zweiten Verbindungselementes (16) des Dämpfungskörpers (10) ist und dass ein Durchmesser (d_{D1}) des ersten Verbindungselements (14) des Dämpfungskörpers (10) kleiner als ein Innendurchmesser des zweiten Anschlusselementes (22) des Piezoelementes (9) ist.

4. Vorrichtung nach einem der Ansprüche 1 bis 3, **dadurch gekennzeichnet, dass** ein Innendurchmesser des zweiten Anschlusselements (19) der Kontaktierungsscheibe (11) größer als ein Durchmesser (d_{D1}) des ersten Verbindungselements (14) des Dämpfungskörpers (10) und der Innendurchmesser des zweiten Verbindungselements (16) des Dämpfungskörpers (10) größer als der Innendurchmesser des zweiten Anschlusselements (22) des Piezoelements (9) ist.

5. Vorrichtung nach einem der Ansprüche 1 bis 4, **dadurch gekennzeichnet, dass** die Dämpfungsscheibe (10) vollständig gummiert ausgebildet ist.

6. Vorrichtung nach einem der Ansprüche 1 bis 5, **dadurch gekennzeichnet, dass** der Bohrungshals (6) und/oder der Zuführungsabschnitt (31) und/oder der Weiterleitungsabschnitt (32) und/oder der Umlenkungsabschnitt (2) nachgiebig ausgebildet ist.

7. Sämaschine mit einem Saatgutspeicher, mit einer Ausbringungseinheit zum Ausbringen von Saatgut aus dem Saatgutspeicher und mit einem Saatgutleitungssystem enthaltend einen Hauptstromverteiler und/oder mindestens eine Saatgutleitung, die mit einer Vorrichtung nach wenigstens einem der Ansprüche 1 bis 6 ausgestattet ist.

## Claims

1. A device for detecting mass particles in air streams carried through pipes, in particular seeds to be distributed in seed drills, comprising a pipe (1), through which the air stream containing the mass particles is guided, with a sensor element (3) arranged on the pipe (1), the sensor element (3) including
- a piezoelectric element (9), an impact plate (8) arranged on a side of the piezoelectric element (9) facing the inside of the pipe (1),
- a damping body (10) arranged on a side of the piezoelectric element (9) facing away from the inside of the pipe, and
- a rigid base body (12) arranged on a side of the piezoelectric element (9) facing away from the inside of the pipe, **characterized in that**
- between the damping body (10) and the rigid base body (12) a contact disk (11) is arranged, having a first connecting element (17) and a second connecting element (19) arranged at a radial distance thereto,
- the damping body (10) is designed as a damping disk, having electrical connection elements (14, 16) spaced apart from one another in the radial direction, wherein, on the one hand, a first connection element (14) electrically connects only the first connecting element (17) of the contact disk (11) to a first connecting element (21) of the piezoelectric element (9) and, on the other hand, a second connection element (16) of the damping disk electrically connects only the second connecting element (19) of the contact disk (11) to the second connecting element (22) of the piezoelectric element (9).

2. The device according to Claim 1, **characterized in that**, on the one hand, the first connecting element (17, 21) of the contact disk (11) or the piezoelectric element (9) and the first connection element (14) of the damping disk (10) are circular and, on the other hand, the second connecting element (19, 22) of the contact disk (11) or the piezoelectric element (9) and the second connection element (16) of the damping disk (10) are circular rings.

3. The device according to Claim 1 or 2, **characterized in that** a diameter (d_{K1}) of the first connecting element (17) is smaller than an inner diameter of the second connection element (16) of the damping body (10), and that a diameter (d_{D1}) of the first connection element (14) of the damping body (10) is smaller than an inner diameter of the second connecting element (22) of the piezoelectric element (9).

4. The device according to any one of Claims 1 to 3, **characterized in that** an inner diameter of the second connecting element (19) of the contact disk (11) is greater than a diameter (d_{D1}) of the first connection element (14) of the damping body (10), and the inner diameter of the second connection element (16) of the damping body (10) is greater than the inner diameter of the second connecting element (22) of the piezoelectric element (9).

5. The device according to any one of Claims 1 to 4, **characterized in that** the damping disk (10) is formed completely rubberized.

6. The device according to any one of Claims 1 to 5, **characterized in that** the bore throat (6) and/or the feed section (31) and/or the downstream transfer section (32) and/or the deflection portion (2) is/are formed in a resilient manner.

7. A seed drill having a seed storage, having a distribution unit for distributing seeds from the seed storage and having a seed pipe system containing a main flow distributor and/or at least one seed pipe, which is equipped with a device according to at least one of Claims 1 to 6.

## Revendications

1. Dispositif de détection de corpuscules dans des flux d'air circulant dans des conduite, en particulier de semences à épandre, dans des semoirs, avec une conduite (1), par laquelle est conduit le flux d'air contenant les corpuscules, avec un élément de détection (3), qui équipe la conduite (1), sachant que l'élément de détection (3) présente
- un piézoélément (9), une surface de chicane (8), disposée sur une face du piézoélément (9) orientée vers l'intérieur de la conduite (1),
- un corps d'amortissement (10), disposé sur une face du piézoélément (9) orientée à l'opposé de l'intérieur de la conduite (1), et
- un corps de base rigide (12), disposé sur une face du piézoélément (9) orientée à l'opposé de l'intérieur de la conduite (1),
**caractérisé en ce que**
- entre le corps d'amortissement (10) et le corps de base rigide (12), est aménagée une plaque de mise en contact (11) avec un premier élément de raccordement (17) et avec un deuxième élément de raccordement (19), disposé à une distance radiale du premier,
- le corps d'amortissement (10) est réalisé sous la forme d'une plaque d'amortissement, qui présente des éléments de raccordement électriques (14, 16), distancés les uns des autres dans la direction radiale, sachant que, d'une part, le premier élément de raccordement (14) relie électriquement uniquement la première surface de raccordement (17) de la plaque de mise en contact (11) à un premier élément de raccordement (21) du piézoélément (9), et que, d'autre part, un deuxième élément de raccordement (16) de la plaque de mise en contact (11) relie électriquement uniquement le deuxième élément de raccordement (19) de la plaque de mise en contact (11) au deuxième élément de raccordement (22) du piézoélément (9).

2. Dispositif selon la revendication 1, **caractérisé en ce que** le premier élément de raccordement (17, 21) de la plaque de mise en contact (11), respectivement du piézoélément (9) et le premier élément de raccordement (14) de la plaque d'amortissement (10), d'une part, présentent une forme annulaire et que le deuxième élément de raccordement (19, 22) de la plaque de mise en contact (11) respectivement du piézoélément (9) et le deuxième élément de raccordement (16) de la plaque d'amortissement (10), d'autre part, présentent une forme annulaire.

3. Dispositif selon revendication 1 ou 2, **caractérisé en ce qu'**un diamètre (dₖ₁) du premier élément de raccordement (17) est plus petit qu'un diamètre intérieur du deuxième élément de raccordement (16) du corps d'amortissement (10) et qu'un diamètre (d_{D1}) du premier élément de raccordement (14) du corps d'amortissement (10) est plus petit qu'un diamètre intérieur du deuxième élément de raccordement (22) du piézoélément (9).

4. Dispositif selon l'une des revendications 1 à 3, **caractérisé en ce qu'**un diamètre intérieur du deuxième élément de raccordement (19) de la plaque de mise en contact (11) est plus grand qu'un diamètre (d_{D1}) du premier élément de raccordement (14) du corps d'amortissement (10) et que le diamètre intérieur du deuxième élément de raccordement (16) du corps d'amortissement (10) est plus grand que le diamètre intérieur du deuxième élément de raccordement (22) du piézoélément (9).

5. Dispositif selon l'une des revendications 1 à 4, **caractérisé en ce que** la plaque d'amortissement (10) est complètement caoutchoutée.

6. Dispositif selon l'une des revendications 1 à 5, **caractérisé en ce que** le col d'alésage (6) et / ou la section d'alimentation (31) et / ou la section de conduite (32) et ou la section d'inversion (2) sont de conception souple.

7. Semeur avec un réservoir de semence, avec une unité d'épandage pour l'épandage de la semence en provenance du réservoir de semence et avec un système de conduite de semence comprenant un distributeur de flux principal et / ou au moins une conduite de semence, qui est reliée à un dispositif selon au moins l'une des revendications 1 à 6.
